Europäisches Patentamt

European Patent Office

Office européen des brevets

(19)

(11) Publication number: **0 098 149**
**B1**

# (12) EUROPEAN PATENT SPECIFICATION

(45) Date of publication of patent specification: **30.03.88**

(51) Int. Cl.⁴: **H 01 G 9/05**

(21) Application number: **83303721.1**

(22) Date of filing: **28.06.83**

(54) **Porous body for electrolytic capacitor having a lead wire and method of producing the same.**

(30) Priority: **28.06.82 JP 111102/82**

(43) Date of publication of application:
**11.01.84 Bulletin 84/02**

(45) Publication of the grant of the patent:
**30.03.88 Bulletin 88/13**

(84) Designated Contracting States:
**DE FR GB IT NL**

(58) References cited:
**EP-A-0 038 149**
**DE-A-2 415 540**
**GB-A-2 076 859**

(73) Proprietor: **NEC CORPORATION**
**33-1, Shiba 5-chome, Minato-ku**
**Tokyo 108 (JP)**

(72) Inventor: **Shimizu, Shigeaki**
**c/o NEC Corporation 33-1, Shiba 5-chome**
**Minato-ku Tokyo (JP)**
Inventor: **Suzuki, Tetsuo**
**c/o NEC Corporation 33-1, Shiba 5-chome**
**Minato-ku Tokyo (JP)**
Inventor: **Kubo, Yoshimi**
**c/o NEC Corporation 33-1, Shiba 5-chome**
**Minato-ku Tokyo (JP)**
Inventor: **Igarashi, Hitoshi**
**c/o NEC Corporation 33-1, Shiba 5-chome**
**Minato-ku Tokyo (JP)**
Inventor: **Arai, Yoshio**
**c/o NEC Corporation 33-1, Shiba 5-chome**
**Minato-ku Tokyo (JP)**

(74) Representative: **Brown, David Alan et al**
**MATHYS & SQUIRE 10 Fleet Street**
**London EC4Y 1AY (GB)**

**Description**

This invention relates to a porous body for an electrolytic capacitor to which lead wires are implanted, and to a method of producing the same. More particularly, the present invention relates to an aluminium-titanium alloy electrolytic capacitor and to a method of producing the same.

So-called valve metals such as tantalum, niobium, zirconium, vanadium, hafnium, titanium and aluminium are known as anode materials for an electrolytic capacitor. Intensive studies have been made conventionally to examine the fundamental characteristics of these metals as the electrolytic capacitor in the form of either single substance or alloy and to put them into practical application.

In order to put these metals into practical application as the capacitor, however, the electric characteristics of these metals such as the leakage current of the oxide film, dielectric loss and the like inherent to the anode material must reach predetermined levels. For this reason, only tantalum and aluminium have been put into practical application at present as the anode metals of the capacitor.

The capacitor using tantalum as the anode material has the advantages that its electric characteristics such as the leakage current and dielectric loss are excellent, it is electrically stable, has extremely high reliability, is small in size but provides a high capacity. However, supply can not follow up the demand of tantalum in recent years due to its limited resources and the price is soaring, thereby raising the production cost of the capacitor.

The capacitor using aluminium as the anode material is less expensive but involves the problem that both miniaturization and increase of capacity are difficult to attain simultaneously. Moreover, the electric characteristics and stability of the capacitor using aluminium are inferior to those of the capacitor using tantalum as the anode material.

Under the circumstances described above, it has been earnestly desired in the art to develop an electrolytic capacitor using, as the anode, those materials which have excellent electric characteristics such as low leakage current and dielectric loss, and excellent reliability and which can be supplied stably and economically. As a result of intensive studies, the applicants of the present invention found that these requirements can be satisfied by a porous sintered body for an electrolytic capacitor using an aluminium-titanium alloy as the anode material. Such porous Al-Ti alloy is disclosed in U.S. Patent 4,331,477 which is issued to the same assignee of the present invention.

A porous Al-Ti body for use as an electrode of a solid electrolytic capacitor is also disclosed in our EP—A—0 038 149. This body is formed by mixing titanium powder having an average particle size of 10 to 30 μm with aluminium powder having an average particle size from $\frac{1}{6}$ to $\frac{1}{2}$ of that of the titanium. The mixture is then compression molded and heat treated in a vacuum or inert gas to diffuse the aluminium into the titanium. In the product, the surface of the titanium-aluminium particles has a fine ruggedness of 0.5 to 5 μm. The aluminium content of the titanium-aluminium alloy is from 50 to 70 atomic %.

A porous Al-Ti alloy body can be obtained by the following steps, for example. First, aluminium and either titanium or titanium hydride (TiH2) in the form of powder in the micron order are sufficiently mixed. The mixed powder is then press-molded with lead wire embedded in it. The mold is sintered at a vacuum of $1.3 \times 10^{-4}$ Pa ($1 \times 10^{-6}$ mmHg.) at a temperature of 1,000 to 1,100°C for 1 to 3 hours, to obtain an alloy porous sintered body. (Al-Ti) alloy reaction occurs during sintering and aluminium is exclusively diffused into and absorbed by titanium, so that the portions where aluminium has been previously present become and remain porous, thereby providing the alloy porous body.

An Al-Ti alloy having excellent capacitor characteristics has also the feature that a porous body having a large specific surface area can be obtained easily. This feature results from the fact that the alloying reaction between Al and Ti has high unidirectionality of diffusion of Al into Ti.

The reaction sintering process of the Al-Ti or Al-TiH$_2$ mixed powder utilizes the peculiarity of this alloying reaction. The skeleton structure and specific surface area of the porous body in this case are fundamentally determined by the particle size distribution of the Ti or TiH$_2$ powder and the porous structure, by the particle size distribution of the Al powder.

In such Al-Ti porous body, the specific surface area of approximately 1 m$^2$/cm$^3$, which corresponds to CV/volume of 75,000 μF·V/cm$^3$, can be obtained easily. Hence, this porous body is extremely advantageous for obtaining an electrolytic capacitor which is small in size but has a large capacitance.

This novel solid electrolytic capacitor is indeed revolutionary in that it has the characterizing features of a tantalum electrolytic capacitor such as a small size and a large capacitance and those of an aluminium electrolytic capacitor such as low cost.

The problem of a lead wire is serious for the Al-Ti capacitor, because the Al-Ti alloy approximate to the composition of the porous body is extremely brittle, the characterizing feature inherent to intermetallic compounds, and it is extremely difficult to prepare a wire from the alloy. For this reason, the same material as the porous body can not be embedded as the lead wire unlike the tantalum capacitor. It is therefore of the utmost importance to find out materials that can substitute it.

However, the material of the lead wire for the Al-Ti capacitor must have the anodization characteristics at least compatible to that of the Al-Ti alloy and must be sufficiently economical. In order to use the material as the embedded lead wire, the material must be resistant to the baking and sintering temperatures and must also have good sinterability with the porous body.

In the light of these requirements, Al and Ta that have been used as the material for the electrolytic capacitor are not suitable. For, the melting point of Al is too low and Ta is too expensive. Having a high melting point, Ta has low sinterability. Other valve metals are mostly expensive and their formation characteristics are not much satisfactory.

Accordingly, the inventors of the present invention have attempted to realize a hard wire, which is substantially homogeneous to the porous body, by alloying the surface of titanium, which is one of the constituent elements of the Al-Ti alloy and is relatively economical, by aluminium.

Various methods may be used to alloy the surface of the Ti wire but the most simple method is to alloy the Ti surface by the Al vapor generated from the porous body during sintering.

Accordingly, if suitable conditions are selected, it is expected that the surface of the Ti wire can be sufficiently alloyed during heat-treatment.

However, the following problems were found out when the Ti wire was used.

First, when the Al-Ti mixed powder composition of the press-molded article is not Al-rich, that is, when the Al content is below about 51 atom % and/or when the sintering temperature is low, the Al vapor becomes insufficient and the wire surface composition of the portion embedded into the sintered body becomes Al-poor, so that the Ti wire surface is not sufficiently alloyed. Under such a state, the formation characteristics such as a leakage current (LC) become extremely deteriorated.

Second, bending deformation of the Ti lead wire is liable to occur at the wire portion outside the sintered body after sintering. This problem of wire bending is serious when putting the material on an automatic mass-production line, and must be solved by all means.

It is therefore an object of the present invention to provide a porous body for an aluminium-titanium alloy electrolytic capacitor, to which inexpensive and undeformed lead wire is implanted.

According to the present invention there is provided a porous sintered body for an Al-Ti alloy solid electrolytic capacitor equipped with a lead wire comprising: a porous body of Al-Ti, characterised in that a titanium lead wire is partly embedded in said sintered body, said titanium lead wire having been subjected to a nitriding treatment and being sintered together with the Al-Ti body, whereby a surface layer of the embedded part of said lead wire is converted into an Al-Ti alloy.

According to the invention there is also provided an Al-Ti alloy solid electrolytic capacitor comprising: a porous sintered body of aluminium and titanium, a dielectric layer formed on said sintered body, and cathode electrode layers formed on said dielectric layer formed on said sintered body, characterised in that a titanium wire subjected to a nitriding treatment is partly embedded in said sintered body, and in that the embedded part of said wire has an Al-Ti alloy surface layer formed by diffusing aluminium into the titanium nitride surface layer of said wire.

According to the present invention there is also provided a method for producing a porous sintered body for an Al-Ti solid electrolytic capacitor comprising press-molding a mixture of Al and Ti powders, and sintering the resulting press-molded article, characterised by the steps of subjecting a titanium wire to a nitriding treatment, embedding a part of said wire in said mixture of said aluminium powder and either said titanium powder or titanium hydride powder, and press-molding the mixture of powders with said wire.

According to the present invention there is also provided a method for producing an Al-Ti alloy solid electrolytic capacitor comprising forming a mixture of Al and Ti powders, press-molding the mixture of powders, sintering the resulting press-molded article, anodizing the resulting sintered article thereby forming a dielectric layer on said sintered article, and forming cathode layers onto said dielectric layer formed on said alloy body, characterised by the steps of mixing said aluminium powder and either said titanium powder or titanium hydride powder, subjecting a titanium wire to a nitriding treatment, press-molding the mixture of powders with a part of said wire embedded in it, and sintering the press-molded article in aluminium-vapor atmosphere thereby forming said porous Al-Ti alloy body while forming an Al-Ti alloy layer in the surface of said wire.

In the present invention, since a titanium wire subjected to nitriding treatment is used as the lead wire to be embedded and press-molded, excellent LC characteristics can be obtained even under the sintering condition in which the aluminium vapor is relatively less during sintering, and a method of producing the porous anode body for an aluminium-titanium electrolytic capacitor devoid of bending of lead wire can also be obtained. The more excellent LC characteristics can be obtained for some reason or other by using the titanium wire subjected to nitriding treatment, than when pure titanium wires are used. The reason why the better LC characteristics can be obtained and bending deformation of the wire does not occur may be assumed as follows.

As the cause of the occurrence of bending deformation of the wire, titanium has a transformation point at about 880°C where the changes from α (hexagonal lattice) phase to β (body centered cubic lattice) phase and vice versa exists, and in the β phase at a sintering temperature (at least 1,000°C), crystal growth and creep deformation are believed to easily occur.

In the case of the titanium wire subjected to nitriding treatment, on the other hand, the α-β transformation temperature as well as the melting point shift to the higher temperatures. (If nitrogen is added in an amount of 6 atom % or 9 atom % in the form of solid solution, the transformation point becomes 1,100°C or 1,300°C). It is thus assumed that transformation does not occur at the sintering temperatures (1,000 to 1,100°C) but the wire remains in the low temperature (normal temperature) phase, that is, the α phase, and bending deformation is difficult to occur due also to the fact that the wire itself is hardened by nitriding treatment.

3

By heat-treating a pure Ti wire in nitrogen atmosphere, the wire surface is converted into a titanium nitride layer. When the press-molded body is heat-treated at a high temperature more than 1000°C, after mounting the wire into the press-molded body during pressing, the surface of the wire is converted to the equilibrium composition, i.e., that of the Al-Ti porous body by virtue of Al vapor. The role of the titanium nitride layer is to suppress the diffusion of aluminium into the center of the wire and, thus, to establish quickly a chemical equilibrium between the porous body and the wire surface.

In other words, the Al component stays in the proximity of the wire surface inside the sintered body even under such a state in which the Al vapor is believed to be less such as when the mixed powder composition of the press-molded article, into which the wire is embedded, is titanium-rich, or when the sintering temperature is relatively low, because nitrogen in titanium has a barrier effect against the aluminium diffusion. Accordingly, the surface composition is not insufficient and the satisfactory LC characteristics can be obtained.

When the cross section of the wire portion, in the radial direction, embedded into the sintered body having 51 atom % Al was analyzed by X-ray microanalyser, it was found that the aluminium component was diffused and distributed considerably deeply from the surface portion into the center of a pure titanium wire having a 0.3 mm diameter and the surface portion was found to have a composition containing about 5 atom % Al. In the case of the titanium wire subjected to nitriding treatment, on the other hand, the composition extending to about 10 μm from the surface was found to contain 40 to 50 atom % Al and to have been sufficiently alloyed. It was also found that Al was hardly distributed further inside.

The reason may be assumed as follows. If the nitriding treatment is not effected, the Al atoms that have been carried onto the wire surface in the vapor phase are sequentially diffused into the wire and the Al concentration on the wire surface does not become much high. If the Ti wire is subjected to the nitriding treatment, on the other hand, the titanium nitride layer formed on the wire surface serves as a kind of barrier against Al diffusion and prevents the Al atoms carried by the vapor phase from being diffused into the wire. Hence, Al is built up to the wire surface.

If nitriding treatment is not carried out, the lead wire surface is considerably Ti-rich, so that the formation characteristics become extremely deteriorated such as 10 to 100 nA/μF·V of a leakage current, for example. In the case of the Ti wire subjected to nitriding treatment, on the other hand, the leakage current is as good as about 0.5 nA/μF·V.

The result described above clearly illustrates that nitrogen in titanium has the barrier effect against the Al diffusion.

Nitriding treatment of the Ti wire is carried out in the nitrogen gas at a temperature of 1,000°C to 1,300°C for a period of about ten minutes to ten seconds, and the wire surface becomes golden which may result from the TiN phase. This surface layer is insoluble in hydrofluoric acid at normal temperature. Peaks which may result from TiN and $Ti_2N$ appear in the observation by means of X-ray diffraction. Sinterability of the nitrided Ti wire with the porous body is compatible to that of the Ti wire and can be regarded as sufficient.

The core portion of the Ti wire is not always converted into titanium nitride by nitriding treatment, but the effect explained above is sufficient so long as a titanium nitride layer having thickness more than one micron is established from the outer wire surface into the wire in a predetermined distance, even though the wire center remains in the state of pure titanium.

Hereinafter, the present invention will be described in further detail with reference to Example thereof.

## Example

Titanium hydride powder and aluminium powder were mixed to prepare two compositions having the Al content of 54 at% and 51 at%, respectively. A nitrided titanium wire and a pure titanium wire were prepared, the latter being for the sake of comparison of characteristics.

The nitrided titanium wire was prepared in the following manner.

Nitrogen gas was caused to flow through an electric furnace having an equalizing temperature range of about 100 cm and the titanium wires were conveyed at a feed speed of about 200 cm/min to carry out continuous nitriding treatment. Both pure titanium wire and nitrided titanium wire had a diameter of about 0.3 mm.

The two kinds of wires were embedded into these two kinds of mixed powder as the lead wires and were press-molded at a pressure of 2 tons/cm². Press-molded samples of four levels were thus prepared. The amount of the mixed powder per press-molded article was 40 mg.

A vessel equipped with a lid having a size of 10 cm × 10 cm × 5 cm was produced using a tantalum plate, as a sintering vessel. The vessel equipped with the lid was used in order to increase the concentration of the Al vapor in the proximity of the samples (ie. the press-molded article using the nitrided titanium wire or pure titanium wire as the lead wire).

The press-molded articles having the four levels were separately placed in this sintering vessel and wire sintered at a reduced pressure of $1.3 \times 10^{-4}$ Pa ($1 \times 10^{-6}$ mmHg.). The number of press-molded articles of each level to be placed in the sintering vessel was two levels, that is, 200 to 1,000, and two levels of sintering temperatures, ie. 1,000°C and 1,050°C, were employed for each case. Thus, 16 levels in total of porous sintered bodies were prepared.

50 each were collected from the sintered bodies of each level as the samples and after anodization at 80 V was effected in an aqueous phosphoric acid solution, a dielectric capacity at 120 Hz and a leakage current at the application of 16 V wire measured.

The mean value of 50 each samples of each level was calculated with the result shown in Table 1. In Table 1, marks were put on the right adjacent column of the leakage current column so as to illustrate the acceptance or rejection of the leakage current value.

The circle mark repressents the accepted value, mark X does the rejected value and the triangle mark does the intermediate level between the former two.

TABLE 1

| Powder composition | Number of press-molded articles | Sintering temperature | Pure Ti wire | | Nitrided Ti Wire | |
|---|---|---|---|---|---|---|
| | | | dielectric capacity ($\mu$F) | leakage current ($\mu$A) | dielectric capacity ($\mu$F) | leakage current ($\mu$A) |
| 54 atom % Al | 200 | 1000°C | 13.6 | 0.282 △ | 13.7 | 0.052 ○ |
| | | 1050°C | 12.2 | 0.064 ○ | 12.3 | 0.048 ○ |
| | 1000 | 1000°C | 13.7 | 0.061 ○ | 13.6 | 0.043 ○ |
| | | 1050°C | 12.1 | 0.048 ○ | 12.2 | 0.041 ○ |
| 51 atom % Al | 200 | 1000°C | 14.5 | 2.58 X | 14.5 | 0.058 ○ |
| | | 1050°C | 12.9 | 1.98 X | 12.9 | 0.047 ○ |
| | 1000 | 1000°C | 14.6 | 0.374 △ | 14.4 | 0.049 ○ |
| | | 1050°C | 12.8 | 0.293 △ | 12.9 | 0.046 ○ |
| state of wire bending after sintering | | | wire bending: existed (approx. 70% or more) | | wire bending: not existed | |

The following can be understood from the results tabulated in Table 1.

When the pure titanium wire was used, good leakage current (LC) characteristics could be obtained if the number of samples sintered simultaneously was large or if the sintering temperature was high, provided that the mixed composition had the Al content of 54 atom %. However, the good LC characteristics could not be obtained if the number of samples was small or if the sintering temperature was low. When the mixed composition had the Al content of 51 atom %, the good LC characteristics could not be obtained at all if the number of sintering samples was small or the sintering temperature was low, and somehow improved LC characteristics could be obtained only if the number of samples was great and the sintering temperature was high. In the case of the nitrided titanium wire, on the other hand, the good LC characteristics could be obtained in all cases, regardless of the difference of the mixed compositions, the numbers of sintering samples and the sintering temperatures. As to bending of the wire after sintering, more than about 70% of the wires underwent bending deformation in the case of the pure titanium wire, whereas bending deformation did not occur at all in the case of the nitrided titanium wire (see the bottom of Table 1).

As described above, the present invention can solve the essential and critical problem of the lead wire for alloy capacitor by using the relatively economical material, that is, nitrided Ti wire, and alloying the surface of the Ti wire by the Al vapor generated from the porous body at the time of sintering. Accordingly, the present invention can provide substantially alloy capacitors having the compositional homogeneity over the porous body and it's lead wire. In view of LC characteristics, it seems favorable that the Al-Ti surface layer of the wire has the composition range of 30 to 70 atom % of aluminium. More favorably, the composition ranges from 40 to 60 atom % of aluminium. It was hard to detect the composition of nitrogen in the Al-Ti alloy surface of the wire. It is believed that the nitrogen may be diffused into the center portion of the wire at the sintering process.

It is desirable to decide the optimum composition of Al-Ti alloy porous body in accordance with the properties evaluated in the form of capacitor. Porous bodies with a series of compositions were made by heat-treating press-molded bodies, which have the size of 2 mm in diameter and 2.5 mm in height, at 1,070°C for three hours. They were anodized at forming voltage ($V_f$) of 80 V by using a 0.05 volume % $H_3PO_4$ solution and a manganese dioxide ($MnO_2$) electrode was formed by thermal decomposition of manganese

5

nitrate which was essentially the same as the process used for tantalum capacitors. After the $MnO_2$ electrode formation, graphite and silver-paste layers were formed on the $MnO_2$ layer. Then leakage current (LC) and tan δ (at 120 Hz) were evaluated. The LC measurements showed that in the composition range of 54 to 60 atom % of aluminium, the LC characteristic was excellent, however, in the composition range of larger than 65 atom % of aluminium, the $MnO_2$ electrode formation seemed to degrade the quality of films severely and resulted in an increase of LC value. As for tan δ which includes the dielectric loss of the film (tan $δ_f$) and the contribution from the equivalent series resistance (ESR) of the $MnO_2$ electrode, it showed a relatively low value for the composition of 54 atom % or more of aluminium. For the composition range for less than 50 atom % of aluminium, neither tan δ nor LC values were adoptable to the actual capacitor.

Thus an porous body made of 54 to 60 atom % of aluminium compositions are favorable as a capacitor anode. Furthermore, the consideration on the specific surface area prefers the compositions around 54 to 55 atom % of aluminium. Therefore, the optimum composition to manufacture capacitors is concluded to be about 54 to 55 atom % of aluminium.

In order to examine the capability of Al-Ti alloy porous anodes to embody a highly miniaturized solid electrolytic capacitor, a series of capacitors, different in size, was manufactured. The powders used were those of titanium hydryde (about two microns in particle diameter) and aluminium (about 3.9 microns in particle diameter) and the composition was 54 atom % of aluminium. The powder mixture was press-molded into three different shapes; A, B and C, that is, A has 1.6 mm in diameter and 2.1 mm in height, B has 2.5 mm in diameter and 2.1 mm in height, and C has 3.5 mm in diameter and 2.1 mm in height.

A titanium wire (0.3 mm in diameter) was subjected to a nitriding treatment and mounted into each of the press-molded bodies during pressing. These press-molded bodies were heat-treated at 1,050°C for one hour and anodized. All heat-treatments of press-molded bodies were done in a vacuum of $1.3 \times 10^{-4}$ Pa ($1 \times 10^{-6}$ mmHg), where a dehydrogenization stage was introduced at a temperature range of 400 to 500°C prior to the final heat-treatment. The anodization voltages ($V_f$) were 80 V for the anode A, 64 V for the anode B, and 60 V for the anode C. After the $MnO_2$ formation and other required process were applied, these were epoxy-sealed.

The electro-static capacitance measurements resulted in the values of 4.7 μF (for A), 10 μF (for B) and 22 μF (for C). The dielectric losses, tan δ (at 120 Hz), were found to be 4 to 6% while the values of LC evaluated at working voltage ($V_w$) of 16 V were about 1 nA/μF·V on average for all sizes of capacitors which were sufficiently small for the actual application. As for the $CV_f$/volume values, they were calculated as about 65,000 to 70,000 μF·V/cm³. In order to make an absolute evaluation of capacitor sizes, one should rather calculate the value, $CV_w$/(capacitor volume).

Defining the working voltage of these capacitors as $V_w$ = 16 V, one obtains as the values of $CV_w$/(capacitor volume); 2.1, 2.5 and 3.6 μF·V/mm³ for A, B and C, respectively. These values are comparable to those of tantalum capacitors.

## Claims

1. A porous sintered body for an Al-Ti alloy solid electroytic capacitor equipped with a lead wire comprising: a porous body of Al-Ti alloy, characterised in that a titanium lead wire is partly embedded in said sintered body, said titanium lead wire having been subjected to a nitriding treatment and being sintered together with the Al-Ti body, whereby a surface layer of the embedded part of said lead wire is converted into an Al-Ti alloy.

2. A porous sintered body for an Al-Ti alloy solid electrolytic capacitor equipped with a lead wire as claimed in claim 1, characterised in that said sintered body contains 50 to 65 atom % of aluminium and the balance titanium and said Al-Ti alloy surface layer of the embedded part of said lead wire contains 30 to 70 atom % of aluminium and the balance titanium.

3. A porous sintered body for an Al-Ti alloy solid electrolytic capacitor equipped with a lead wire as claimed in claim 1, characterised in that said sintered body contains 54 to 60 atom % of aluminium and the balance titanium and said Al-Ti alloy surface layer of the embedded portion of said lead wire contains 40 to 60 atom % of aluminium and the balance titanium.

4. An Al-Ti alloy solid electrolyte capacitor comprising: a porous sintered body of aluminium and titanium, a dielectric layer formed on said sintered body, and cathode electrode layers formed on said dielectric layer formed on said sintered body, characterised in that a titanium wire subjected to a nitriding treatment is partly embedded in said sintered body, and in that the embedded part of said wire has an Al-Ti alloy surface layer formed by diffusing aluminium into the titanium nitride surface layer of said wire.

5. An Al-Ti alloy solid electrolytic capacitor as claimed in claim 4, characterised in that said Al-Ti alloy layer of said wire contains 30 to 70 atom % of aluminium and the balance titanium with a thickness greater than one micron measured from the surface of said wire.

6. An Al-Ti alloy solid electrolytic capacitor as claimed in claim 4, characterised in that said sintered body contains 54 to 55 atom % of aluminium and the balance titanium while said Al-Ti alloy surface layer of said wire contains 40 to 60 atom % of aluminium and the balance titanium.

7. An Al-Ti alloy solid electrolytic capacitor as claimed in claim 4, characterised in that said sintered body contains 50 to 65 atom % of aluminium and the balance titanium, said Al-Ti alloy surface layer contains 30 to 70 atom % of aluminium and the balance titanium, an anodized dielectric layer is formed on said sintered body, a manganese dioxide layer formed on said dielectric layer, and a conductive layer formed on said manganese dioxide layer.

8. A method for producing a porous sintered body for an Al-Ti solid electrolytic capacitor comprising press-molding a mixture of Al and Ti powders, and sintering the resulting press-molded article, characterised by the steps of subjecting a titanium wire to a nitriding treatment, embedding a part of said wire in said mixture of said aluminium powder and either said titanium powder or titanium hydride powder, and press-molding the mixture of powders with said wire.

9. A method for producing an Al-Ti alloy solid electrolytic capacitor comprising forming a mixture of Al and Ti powders, press-molding the mixture of powders, sintering the resulting press-molded article, anodizing the resulting sintered article thereby forming a dielectric layer on said sintered article, and forming cathode layers onto said dielectric layer formed on said porous alloy body, characterised by the steps of mixing said aluminium powder and either said titanium powder or titanium hydride powder, subjecting a titanium wire to a nitriding treatment, press-molding the mixture of powders with a part of said wire embedded in it, and sintering the press-molded article in aluminium-vapor atmosphere thereby forming said porous Al-Ti alloy body while forming an Al-Ti alloy layer in the surface of said wire.

10. A method for producing an Al-Ti alloy solid electrolytic capacitor as claimed in claim 9, characterised in that said aluminium vapour is generated from said porous Al-Ti alloy body at the time of said sintering process.

11. A method for producing an Al-Ti alloy solid electrolytic capacitor as claimed in claim 9, characterised in that said wire is prepared by heating a pure titanium wire in nitrogen atmosphere thereby converting a surface layer of said titanium wire into titanium nitride layer, and aluminium is diffused into said titanium nitride layer by heating said wire in aluminium-vapor atmosphere, said aluminium-vapor being generated from said porous Al-Ti alloy body at the time of said sintering process, thereby forming an Al-Ti alloy layer into said titanium nitride layer, said Al-Ti alloy layer containing 30 to 70 atom % of aluminium.

12. A method for producing an Al-Ti alloy solid electrolytic capacitor as claimed in claim 10, characterised in that said wire is prepared by heating a titanium wire in nitrogen atmosphere at a temperature of 1,000°C to 1,300°C thereby converting the wire surface into a titanium nitride layer, said dielectric layer is formed by anodizing the sintered article in an aqueous phosphoric acid solution, a manganese dioxide layer is formed on said dielectric layer, and a cathode electrode layer is formed on said manganese dioxide layer.

**Patentansprüche**

1. Poröser gesinterter Körper für einen elektrolytischen Al-Ti-Legierungsfestkörperkondensator, der mit einem Zuführungsdraht versehen ist und einen Körper aus einer Al-Ti-Legierung aufweist, dadurch gekennzeichnet, daß ein Zuführungsdraht aus Titan teilweise in den gesinterten Körper eingebettet ist, wobei der Titandraht einer Nitridbehandlung ausgesetzt wurde und zusammen mit dem Al-Ti-Körper gesintert wurde, wodurch eine Oberflächenschicht des eingebetteten Teils des Zuführungsdrahtes in eine Al-Ti-Legierung umgewandelt wurde.

2. Poröser gesinterter Körper für einen elektrolytischen Al-Ti-Legierungsfestkörperkondensator mit einem Zuführungsdraht nach Anspruch 1, dadurch gekennzeichnet, daß der gesinterte Körper 50 bis 65 Atom% Aluminium und als Rest Titan enthält und daß die Oberflächenschicht aus Al-Ti-Legierung des eingebetteten Teils des Zuführungsdrahtes 30 bis 70 Atom% Aluminium und als Rest Titan enthält.

3. Poröser gesinterter Körper für einen elektrolytischen Al-Ti-Legierungsfestkörperkondensator mit einem Zuführungsdraht nach Anspruch 1, dadurch gekennzeichnet, daß der gesinterte Körper 54 bis 60 Atom% Aluminium und als Rest Titan enthält und daß die Oberflächenschicht aus Al-Ti-Legierung des eingebetteten Teils des Zuführungsdrahtes 40 bis 60 Atom% Aluminium und als Rest Titan enthält.

4. Elektrolytischer Al-Ti-Legierungsfestkörperkondensator mit einem porösen gesinterten Körper aus Aluminium und Titan, einer auf dem gesinterten Körper ausgebildeten dielektrischen Schicht und auf der auf dem gesinterten Körper ausgebildeten dielektrischen Schicht ausgebildete Kathodenschichten, dadurch gekennzeichnet, daß ein einer Nitridbehandlung ausgesetzter Titandraht teilweise in den gesinterten Körper eingebettet ist und daß der eingebettete Teil des Drahts eine Oberflächenschicht aus Al-Ti-Legierung aufweist, die durch Diffusion von Aluminium in die Titannitridoberflächenschicht des Drahtes erzeugt ist.

5. Elektrolytischer Al-Ti-Legierungsfestkörperkondensator nach Anspruch 4, dadurch gekennzeichnet, daß die Al-Ti-Legierungsschicht des Drahtes 30 bis 70 Atom% Aluminium und als Rest Titan enthält und eine von der Oberfläche des Drahtes aus gemessene Dicke von mehr als 1 µm aufweist.

6. Elektrolytischer Al-Ti-Legierungsfestkörperkondensator nach Anspruch 4, dadurch gekennzeichnet, daß der gesinterte Körper 54 bis 55 Atom% Aluminium und als Rest Titan enthält, während die Al-Ti-Legierungsoberflächenschicht des Drahtes 40 bis 60 Atom% Aluminium und als Rest Titan enthält.

7. Elektrolytischer Al-Ti-Legierungsfestkörperkondensator nach Anspruch 4, dadurch gekennzeichnet, daß der gesinterte Körper 50 bis 55 Atom% Aluminium und das Resttitan enthält, die Al-Ti-Legierungsoberflächenschicht 30 bis 70 Atom% Aluminium und als Rest Titan enthält, eine eloxierte dielektrische Schicht auf dem gesinterten Körper ausgebildet ist, eine Mangandioxidschicht auf der dielektrischen Schicht ausgebildet ist und eine Leitungsschicht auf der Mangandioxidschicht ausgebildet ist.

8. Verfahren zur Herstellung eines porösen gesinterten Körpers für einen elektrolytischen Al-Ti-Legierungsfestkörperkondensator durch Preßformen einer Mischung aus Al- und Ti-Pulvern und Sintern des gefertigten preßgeformten Produkts, gekennzeichnet durch die Schritte Nitridbehandlung eines Drahtes, Einbetten eines Teils des Drahtes in die Mischung aus Aluminiumpulver und entweder dem Titanpulver oder einem Titanhydridpulver und Preßformen der Pulvermischung mit dem Draht.

9. Verfahren zur Herstellung eines elektrolytischen Al-Ti-Legierungsfestkörperkondensators durch Bilden einer Mischung von Al- und Ti-Pulvern, Preßformen der Pulvermischung, Sintern des gefertigten preßgeformten Produkts, Eloxieren des fertigen gesinterten Produkts, wodurch eine dielektrische Schicht auf dem gesinterten Produkt ausgebildet wird und Ausbilden von Kathodenschichten auf der auf dem porösen Legierungskörper ausgebildeten dielektrischen Schicht, gekennzeichnet durch die Schritte Mischen des Aluminiumpulvers mit entweder dem Titanpulver oder einem Titanhydridpulver, Durchführen einer Nitridbehandlung an einem Titandraht, Preßformen der Pulvermischung, wobei ein Teil des Drahtes in sie eingebettet ist und Sintern des preßgeformten Produkts in einer Aluminiumdampfatmosphäre, wodurch der poröse Al-Ti-Legierungskörper gefertigt wird, während eine Al-Ti-Legierungsschicht in der Oberfläche des Drahtes ausgebildet wird.

10. Verfahren zur Herstellung eines elektrolytischen Al-Ti-Legierungsfestkörperkondensators nach Anspruch 9, dadurch gekennzeichnet, daß während des Sintervorgangs der Aluminiumdampf aus dem porösen Al-Ti-Legierungskörper erzeugt wird.

11. Verfahren zur Herstellung eines elektrolytischen Al-Ti-Legierungsfestkörperkondensators nach Anspruch 9, dadurch gekennzeichnet, daß der Draht durch Heizen eines reinen Titandrahtes in einer Stickstoffatmosphäre hergestellt wird, wodurch eine Oberflächenschicht des Titandrahtes in eine Titannitridschicht umgewandelt wird und Aluminium in die Titannitridschicht durch Heizen des Drahtes in einer Aluminiumdampfatmosphäre eindiffundiert wird, wobei der Aluminiumdampf während des Sintervorgangs von dem porösen Al-Ti-Legierungskörper erzeugt wird, wodurch eine Al-Ti-Legierungs-schicht in der Titannitridschicht erzeugt wird und die Al-Ti-Legierungsschicht 30 bis 70 Atom% Aluminium enthält.

12. Verfahren zur Herstellung eines elektrolytischen Al-Ti-Legierungsfestkörperkondensators nach Anspruch 10, dadurch gekennzeichnet, daß der Draht durch Heizen eines Titandrahtes in einer Stickstoffatmosphäre bei einer Temperatur von 1000°C bis 1300°C erzeugt wird, wodurch die Drahtoberfläche in eine Titannitridschicht umgewandet wird, und daß die dielektrische Schicht durch Eloxieren des gesinterten Artikels in einer wässrigen Phosphorsäurelösung ausgebildet wird, eine Mangandioxidschicht auf der dielektrischen Schicht ausgebildet wird und eine Kathodenschicht auf der Mangandioxidschicht ausgebildet wird.

**Revendications**

1. Corps fritté poreux pour un condensateur électrolytique solide en alliage Al-Ti équipé d'un fil de connexion comprenant: un corps poreux en alliage Al-Ti, caractérisé en ce qu'un fil de connexion en titane est en partie noyé dans le corps fritté, ce fil de connexion en titane ayant été soumis à un traitement de nitruration et ayant été fritté avec le corps en Al-Ti, d'où il résulte qu'une couche superficielle de la partie noyée du fil de connexion est transformée en alliage Al-Ti.

2. Corps fritté poreux pour un condensateur électrolytique solide en alliage Al-Ti équipé d'un fil de connexion selon la revendication 1, caractérisé en ce que le corps fritté contient de 50 à 65 atomes % d'aluminium et le reste du titane et la couche superficielle en alliage Al-Ti de la partie noyée du fil de connexion contient 30 à 70 atomes % d'aluminium et le reste en titane.

3. Corps fritté poreux pour un condensateur électrolytique solide en alliage Al-Ti équipé d'un fil de connexion selon la revendication 1, caractérisé en ce que le corps fritté contient de 54 à 60 atomes % d'aluminium et le reste du titane et la couche superficielle en alliage Al-Ti de la partie noyée du fil de connexion contient de 40 à 60 atomes % d'aluminium et le reste en titane.

4. Condensateur électrolytique solide en alliage Al-Ti comprenant: un corps fritté poreux en aluminium et en titane, une couche diélectrique formée sur le corps fritté, et des couches d'électrode de cathode formées sur la couche diélectrique formée sur le corps fritté, caractérisé en ce qu'un fil de connexion en titane soumis à un traitement de nitruration est en partie noyé dans le corps fritté, et en ce que la partie noyée du fil a une couche superficielle en alliage Al-Ti formée en diffusant de l'aluminium dans la couche superficielle de nitrure de titane du fil.

5. Condensateur électrolytique solide en alliage Al-Ti selon la revendication 4, caractérisé en ce que la couche en alliage Al-Ti du fil contient de 30 à 70 atomes % d'aluminium et le reste en titane avec une épaisseur supérieure à un micromètre mesurée à partir de la surface du fil.

6. Condensateur électrolytique solide en alliage Al-Ti selon la revendication 4, caractérisé en ce que le corps fritté contient de 54 à 55% atomes % d'aluminium et le reste en titane, alors que la couche superficielle en alliage Al-Ti du fil contient de 40 à 60 atomes % d'aluminium et le reste en titane.

7. Condensateur électrolytique solide en alliage Al-Ti selon la revendication 4, caractérisé en ce que le corps fritté contient de 50 à 65 atomes % d'aluminium et le reste en titane, la couche superficielle en alliage Al-Ti contient de 30 à 70 atomes % d'aluminium et le reste en titane, une couche diélectrique anodisée est formée sur le corps fritté, une couche de bioxyde de manganèse est formée sur la couche diélectrique, et une couche conductrice est formée sur la couche de bioxyde de manganèse.

8. Procédé de fabrication d'un corps fritté poreux pour condensateur électrolytique solide en Al-Ti, comprenant le moulage par compression d'un mélange de poudres d'Al et Ti, et le frittage de l'article moulé par compression résultant, caractérisé par les étapes consistant à soumettre un fil de titane à un traitement de nitruration, à noyer une partie du fil dans le mélange de la poudre d'aluminium et de la poudre soit de titane soit d'hydrure de titane, et à mouler par compression le mélange de poudres avec le fil.

9. Procédé de fabrication d'un condensateur électrolytique solide en alliage Al-Ti, comprenant la formation d'un mélange de poudres d'Al et Ti, le moulage par compression du mélange de poudres, le frittage de l'article moulé par compression résultant, l'anodisation de l'article fritté résultant formant ainsi une couche diélectrique sur l'article fritté, et la formation de couches cathodiques sur la couche diélectrique formée sur le corps en alliage poreux, caractérisé par les étapes consistant à mélanger la poudre d'aluminium et la poudre soit de titane soit d'hydrure de titane, à soumettre un fil de titane à un traitement de nitruration, à mouler sous compression le mélange de poudres avec une partie du fil noyée de dans, et à fritter l'article moulé par compression en atmosphère de vapeur d'aluminium formant ainsi le corps en alliage Al-Ti poreux simultanément à la formation d'une couche d'alliage Al-Ti dans la surface du fil.

10. Procédé de fabrication d'un condensateur électrolytique solide en alliage Al-Ti selon la revendication 9, caractérisé en ce que la vapeur d'aluminium est produite par le corps en alliage Al-Ti poreux au moment du processus de frittage.

11. Procédé de fabrication d'un condensateur électrolytique solide en alliage Al-Ti selon la revendication 9, caractérisé en ce que le fil est préparé par chauffage d'un fil de titane pur en atmosphère d'azote, d'où le transformation d'une couche superficielle du fil de titane en couche de nitrure de titane, et en ce que l'aluminium est diffusé dans la couche de nitrure de titane par chauffage du fil sous atmosphère de vapeur d'aluminium, la vapeur d'aluminium étant produite à partir du corps d'alliage d'Al-Ti poreux au moment du processus de frittage, d'où la formation d'une couche d'alliage Al-Ti dans la couche de nitrure de titane, la couche d'alliage Al-Ti contenant 30 à 70 atomes % d'aluminium.

12. Procédé de fabrication d'un condensateur électrolytique solide en alliage Al-Ti selon la revendication 10, caractérisé en ce que le fil est préparé par chauffage d'un fil de titane sous atmosphère d'azote à une température de 1000°C à 1300°C, d'où la transformation de la surface du fil en couche de nitrure d'aluminium, la couche diélectrique est formée par anodisation de l'article fritté dans une solution aqueuse d'acide phosphorique, une couche de bioxyde de manganèse est formée sur la couche diélectrique, et une couche d'électrode cathodique est formée sur la couche de bioxyde de manganèse.